# EUROPÄISCHE PATENTSCHRIFT

(11) **EP 3 932 513 B1**
(45) Veröffentlichungstag und Bekanntmachung des Hinweises auf die Patenterteilung: **19.03.2025**
(21) Anmeldenummer: 21182804.1
(22) Anmeldetag: 30.06.2021
(51) Int. Cl.: B01D 19/00, F15B 21/044, F25B 43/04, F24D 19/08, F25B 1/00

(54) **MEMBRAN-GASABSCHEIDER**
MEMBRANE GAS SEPARATOR
SÉPARATEUR DE GAZ À MEMBRANE

(30) Priorität: 01.07.2020 DE 102020117276
(43) Veröffentlichungstag der Anmeldung: 05.01.2022
(73) Patentinhaber: Vaillant GmbH, 42859 Remscheid (DE)
(72) Erfinder: WOHLFEIL, Arnold, 42799 Leichlingen (DE)
(74) Vertreter: Popp, Carsten

(56) Entgegenhaltungen:
- EP-A1- 3 483 526
- EP-A1- 3 483 527
- EP-A1- 3 513 855
- DE-A1- 102017 118 531

## Beschreibung

Die Erfindung betrifft die Abscheidung entzündlicher Gase in einem Heizungskreislauf oder Kühlsolekreislauf. Es ist bekannt, dass Heizkreisläufe gelegentlich entlüftet werden müssen, da sich Luft im System ansammeln kann. Meist geschieht dies durch Undichtigkeiten an erhöhten Stellen im Heizkreislauf, bei denen eine Undichtigkeit in Verbindung mit Unterdruck zum Ansaugen von Luft in den Wasserkreislauf führt. In manchen Fällen handelt es sich auch um Luft, die in Nachfüllwasser gelöst ist und die bei dessen Erwärmung freigesetzt wird. Dasselbe gilt für Sole-Split-Anlagen, bei denen sich Sole im Heizkreis befindet.

Befindet sich Luft im System, führt dies oftmals zu Funktionsstörungen und Schäden an Anlagenkomponenten durch Korrosionsprozesse. Gerade Bauteile mit Verschleißteilen wie zum Beispiel Umwälzpumpen sind hiervon betroffen. Außerdem werden Umwälzabläufe durch etwaige Luftpolster behindert und die Wärmeverteilung an sich gestört oder sogar unterbrochen. Verbunden sind die Fehlfunktionen dabei oftmals mit Fließ- und Kavitationsgeräuschen. Gebräuchlich sind daher Entlüfter, mit denen solche Luft aus dem System entfernt werden kann. Problematisch werden solche Entlüfter dann, wenn sich nicht nur Luft im System befindet.

In neueren Kältekreisen, zum Beispiel in Wärmepumpen, werden keine Sicherheitskältemittel mehr verwendet, sondern entzündliche natürliche Arbeitsfluide wie z.B. R290 und R1270. Deren Arbeitsdruck ist sowohl auf der Wärme aufnehmenden Seite als auch auf der Wärme abgebenden Seite regelmäßig höher als der übliche Druck in Heizkreisläufen. Je nach Schaltung und Betriebsweise können Leckagen im Kondensator oder Verdampfer daher zum Austritt von gasförmigem brennbarem Arbeitsfluid aus dem Kältekreis in den Heiz- oder Solekreislauf führen. Dies würde nachfolgend beim Entlüften dazu führen, dass ein zündfähiges Gemisch austreten könnte. Das darf aus Sicherheitsgründen keinesfalls geschehen. Dasselbe gilt natürlich auch für herkömmliche, brennbare Kältemittel wie z.B. R32, sofern solche noch zur Anwendung gelangen.

Im Stand der Technik verhindert man dies durch Verwendung von doppelwandigen Edelstahl-Wärmetauschern als Kondensatoren und Verdampfer. Im Falle einer Leckage tritt das brennbare Arbeitsfluid in den Zwischenraum der beiden Wandungen ein und wird dort separat abgesaugt und einer Nachbehandlung unterworfen. Diese Nachbehandlung kann auch entfallen, wenn es einen sicheren Weg in die Atmosphäre gibt, bei dem eine Vermischung mit Luft in einer Menge erfolgt, dass sich ein zündfähiges Gemisch nicht bilden kann. Der Zwischenraum beträgt dabei meist nur wenige Zehntelmillimeter. Diese Bauformen sind aber einerseits teuer und andererseits behindern sie den Wärmeübergang, weil der Zwischenraum wie eine Wärmedämmung wirkt, sie verringern also den erreichbaren Wirkungsgrad. Im Übrigen können Leckagen auch beide Wände betreffen. Aus diesen Gründen setzt die Erfindungen beim Entlüften von Heizkreisläufen an.

Unterscheiden muss man dabei zwischen manuellen und automatischen Entlüftern, die auch als Schnellentlüfter bezeichnet werden. Manuell funktioniert ein Entlüftungsvorgang dabei über Entlüfterhähne. Hierbei handelt es sich lediglich um einen Zapfhahn, der je nach Bedarf geöffnet und wieder geschlossen wird, sobald das sich im System befindliche Gas, in der Regel Luft, vollständig entwichen ist. Man kann aber auch per Schnellentlüfter das System automatisch entlüften. Schnellentlüfter gibt es in den verschiedensten Bauformen.

Die DE 10 2006 015 263 A1 beschreibt ein automatisches Entlüftungsventil mit einer Membran, die durchlässig ist für gasförmige Medien. Der Membranwerkstoff ist aus Kunststoff, etwa PTFE oder PP, ist oleophobisch und/oder hydrophobisch und nicht benetzbar bei kleinsten Oberflächenspannungen. Gegenüber Flüssigkeiten ist der Membranwerkstoff nicht durchlässig und hält, je nach Bauart, den hohen Drücken einer Heizungsanlage stand. Die Membran kann entweder als poröser Ring ausgeführt sein, der radial durchströmt wird, oder als Scheibe, die axial durchströmt wird. Bezüglich der sonstigen Bauformen wird auf den umfangreichen, in der DE 10 2006 015 263 A1 vorgestellten Stand der Technik verwiesen. Ein solches Entlüftungsventil würde aber sowohl Luft als auch brennbares Gas gemeinsam abscheiden, was zu einem zündfähigen Gemisch führen könnte.

Die DE 10 2009 048 402 A1 und die DE 10 2010 024 107 A1 beschreiben Weiterentwicklungen von Entlüftungsautomaten als Systembaukasten. Die DE 10 2006 021 454 A1 beschreibt eine gegenüber der DE 10 2006 015 263 A1 verbesserte Ausführungsform, die auch einen Schwimmer enthält. Weitere bekannte Ausführungen betreffen das Einfangen von feinen Gasblasen mittels Bürsten oder Pallringen, oder auch sonstigen Packungen und Schüttungen im Strömungsweg, die zur Koagulation und zur besseren Abscheidung aus dem flüssigen Medium führen. Das Problem der Abscheidung eines möglicherweise zündfähigen Gemischs besteht jedoch auch hier.

Die bekannten Membranen für Entlüfter lassen jedoch sowohl Luft als auch entzündliche Gase wie z.B. Propangas durch, die Bildung eines entzündlichen Gemischs nach der Passage der Membran kann so nicht verhindert werden.

Vorliegend soll hierfür das Verfahren der Gaspermeation und der Pervaporation verwendet werden, wobei sich die Verfahren nur dadurch unterscheiden, dass der zu trennende Stoff im Falle der Pervaporation zusätzlich verdampft wird, was Wärmezufuhr und das Anlegen eines Partialdruck-Vakuums erfordert. In beiden Fällen werden Gase voneinander getrennt und es liegen zwei gekoppelte Transportmechanismen innerhalb der verwendeten Membran vor. Zunächst muss sich der abzuscheidende Stoff, in diesem Fall das Arbeitsfluid bzw. das Kältemittel, an der Membran anlagern bzw. adsorbieren. Anschließend muss der Stoff durch die Membran diffundieren. Für beide Mechanismen ist eine hohe Selektivität und für den abzutrennenden Stoff ein geringer Transportwiderstand anzustreben.

Die Abtrennung der Gasblasen des brennbaren Kältemittels kann sowohl aus der Flüssigkeit erfolgen als auch aus dem Gas. Im ersten Fall werden zwei Gasabscheider benötigt, wobei der erste der beiden ein Membran-Gasabscheider und der zweite der beiden ein herkömmlicher Entlüfter ist. Der Membran-Gasabscheider dient dazu, ausschließlich und möglichst selektiv Gasblasen aus entzündlichem Arbeitsfluid aus dem Heizungskreislaufwasser abzuscheiden, bevor im herkömmlichen Entlüfter die Luft abgeschieden wird. Während der herkömmliche Entlüfter üblicherweise am höchsten Punkt des Heizkreislaufs platziert wird, ist der vorgelagerte Membran-Gasabscheider am tiefsten Punkt vorzusehen, da dort die höchste Druckdifferenz über die Membran besteht und damit die bestmögliche Abscheideleistung erreicht wird.

Im zweiten Fall wird ein herkömmlicher automatischer Luftabscheider dahingehend modifizert, dass noch unter Druck eine Abscheidung des entzündlichen Gases aus der Luft erfolgt, bevor die abgeschiedene Luft entspannt und ins Freie geleitet wird. Beiden Abscheidungen ist gemeinsam, dass die Abscheidung aus einer Gasphase heraus erfolgt, im ersten Fall sind es Gasblasen ungelösten bzw. unlösbaren Gases, die sich an die Membran anlagern, bevor sie von ihr adsorbiert werden, im zweiten Fall ist es eine homogene Gasphase. Es spielt dabei keine Rolle, ob es sich um eine homogene oder eine heterogene Phase handelt, aber in der Heizkreislaufflüssigkeit gelöste Gase werden so nicht abgeschieden, nur entzündliche Kältemittel in Gasblasen.

Zu diesem Zweck kommt eine Kompositmembran zum Einsatz. Eine derartige, ähnliche Membran wird in der EP 3 483 526 A1 und der EP 3 483 527 A1 beschrieben, wobei aber die abzuscheidenden bzw. voneinander zu trennenden Stoffe anders als hier sind. Die Lehre der beiden Schriften dient dazu, in einen Kältekreislauf eingetragene Luft von Kältemittel abzuscheiden und das Kältemittel zurückzugewinnen, während hier das in ein wässriges Wärmeübertragungsmedium eingetragenes Kältemittel zusammen mit eingetragener Luft abgeschieden werden soll. Aus diesem Grund findet die Verwendung in anderer Weise statt.

Als Oberfläche zu der Seite, an der das abzuscheidende Arbeitsfluid bzw. Kältemittel anfällt, wird eine hydrophobische, keramische Schicht aus Zeolith eingesetzt, bevorzugte Zeolithe sind NaY-Zeolith, ZSM-5-Zeolith und Silicalit-1-Zeolith. Diese können auch in mehreren Schichten kombiniert werden. Als Kernmaterial wird eine gummiartige Polymermembran verwendet, bevorzugt sind dies Polydimethylsiloxan, Polyetherblockamid oder Polybutadien, einzeln oder in Mischungen.

Die Aufgabe der Erfindung ist es daher, einen Abscheider für die Klima-Heizungs-Lüftungstechnik zur Verfügung zu stellen, der gasförmige brennbare Bestandteile aus dem Fluidumlauf eines Wärmeübertragungsmediums separat abscheidet und abführt.

Die Erfindung löst diese Aufgabe durch Verwendung eines Membran-Gasabscheiders für die Klima-Heizungs-Lüftungstechnik, aufweisend
- Mittel zum Abscheiden von Gasblasen, die ein brennbares Gas enthalten können, aus einer fließenden wässrigen Flüssigkeit, und
- mindestens eine Kammer zur Sammlung von abgeschiedenen Gasbestandteilen,
- einem Abzug für die abgeschiedenen Gasbestandteile, wobei
- im Strömungsweg des abzuscheidenden Gases eine Kompositmembran vorgesehen ist, die aus mindestens zwei Schichten zusammengesetzt ist, von denen mindestens eine Schicht aus einer keramischen Schicht aus Zeolith und mindestens eine weitere Schicht aus einer gummiartigen Polymermembran gebildet ist,
- und die mindestens eine Schicht aus der keramischen Schicht aus Zeolith im Strömungsweg des abzuscheidenden Gases als erste Schicht vorgesehen wird, in der das brennbare Gas entweder aus der Gasphase oder aus der Flüssigphase heraus adsorbiert wird,
- nachfolgend im Strömungsweg des abzuscheidenden Gases die weitere Schicht als Diffusionsschicht ausgebildet ist,
- nachfolgend im Strömungsweg die Kammer zur Sammlung von abgeschiedenen Gasbestandteilen angeordnet ist,
- wobei die Kammer zur Sammlung von abgeschiedenen Gasbestanteilen an einen unter Unterdruck stehenden Abzug angeschlossen ist.

Die keramische Schicht der Kompositmembran aus Zeolith ist dabei in bekannter Weise aus Schichten von NaY-Zeolith, ZSM-5-Zeolith oder Silicalit-1-Zeolith oder aus einer Mischung daraus gebildet. Diese Mischung kann auch aus mehreren Einzelschichten bestehen und mit einer hydrophoben Oberflächenbeschichtung ausgestattet sein.

Besondere Ausgestaltungen betreffen die gummiartige Polymermembran der Kompositmembran. Diese kann aus Polydimethylsiloxan, Polyetherblockamid oder Polybutadien oder einer Mischung daraus gebildet sein. Sofern die mechanischen Eigenschaften der Kompositmembran die anliegende Druckdifferenz nicht stabil stützen können, kann selbstverständlich eine inaktive und durchlässige Stützschicht hinzugefügt werden.

In bekannter Weise wird vorgesehen, dass am Abzug der Kammer zur Sammlung von abgeschiedenen Gasbestandteilen eine Vakuumpumpe vorgesehen ist. Diese Vakuumpumpe stellt sicher, dass stets ein ausreichendes Partialdruckgefälle über die Kompositmembran anliegt, dabei muss die Vakuumpumpe nur angeschaltet werden, wenn tatsächlich entzündliches Gas auf der Außenseite der Membran detektiert wird.

Die Erfindung wird nachfolgend anhand von zwei Prinzipskizzen näher erläutert. Hierbei zeigen:
Fig. 1 einen Membran-Gasabscheider zur Abscheidung aus einer homogenen Gasphase,
Fig. 2 einen Membran-Gasabscheider zur Abscheidung von Gasblasen aus Flüssigkeit.

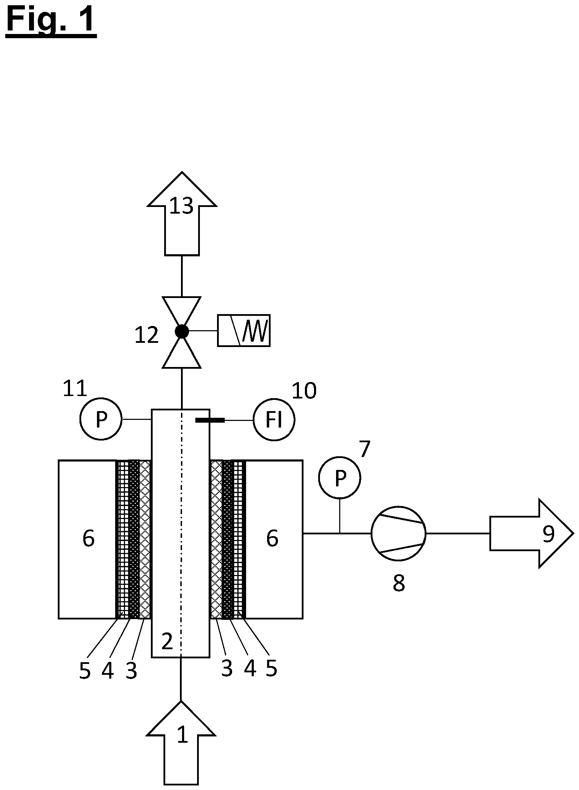

Fig. 1 zeigt einen Membran-Gasabscheider für entzündliches Gas als Modul, welches in dieser Form in einen automatischen Entlüfter herkömmlicher Bauweise integriert werden kann. Die Gasmischung 1, die aus einem automatischen oder manuellen Entlüfter kommt, besteht im Normalfall aus Luft, im Leckagefall enthält sie aber auch entzündliche Bestandteile. Sofern der Wasserkreislauf an einen Kältekreis angeschlossen ist, der mit dem Kältemittel R290 betrieben wird, ist dies beispielsweise Propan. Bei Verwendung von R600a oder R1270 können dies auch andere Alkane oder Alkene sein.

Die Gasmischung 1 tritt in die runde innere Kammer 2 ein, die außen durch die Kompositmembran ringförmig umschlossen ist. Die Kompositmembran besteht aus der inneren keramischen Schicht 3 aus Zeolith, der gummiartigen Polymermembran 4 und dem Stützgerüst 5. Nur wenn entzündliches Gas in der Gasmischung 1 vorhanden ist, diffundiert es durch die Kompositmembran in die äußere Sammelkammer 6, die unter Vakuum gehalten wird. Das Vakuum wird dabei vom Druckmessgerät 7 gemessen, wenn es einen vordefinierten Wert übersteigt, wird es von der Vakuumpumpe 8 zur weiteren Verwendung 9 oder Entsorgung verbracht.

Das übrige Gas aus der Gasmischung, welches nicht entzündlich ist, wird nach einer Konzentrationsmessung 10, in der geprüft wird, ob sich Restbestandteile an entzündlichem Gas in der Gasmischung befinden, und einer Druckmessung 11 über ein Reduzierventil 12 in die Atmosphäre 13 entlassen.

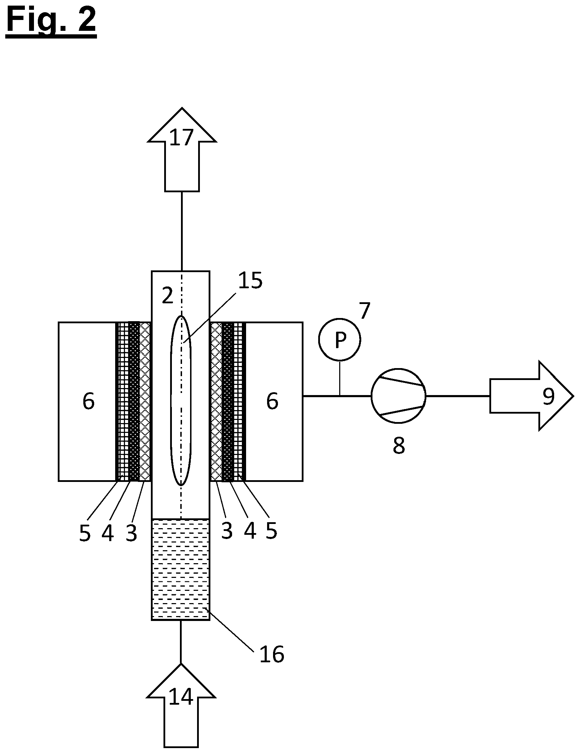

Fig. 2 zeigt einen Membran-Gasabscheider zur Abscheidung von Gasblasen aus Flüssigkeit 14, in der Regel einem Heizkreislauf oder einem Solekreislauf. Um Gasblasen in der Flüssigkeit, die oft sehr feinblasig sind, zu koagulieren, wird die Flüssigkeit durch ein Gewirre 16 geleitet, wobei auch Pallringe oder Bürsten zum Einsatz kommen können, in der Membran wird danach durch ein Strömungsteil 15 eine Ringströmung erzeugt, um den Weg der Gasblasen zur Wandung der Membran zu verkürzen. Die Blasen lagern sich daraufhin an der keramischen Schicht 3 an und das entzündliche Gas diffundiert durch die Kompositmembran in analoger Weise wie in Fig. 1 beschrieben.

Die um entzündliches Gas abgereicherte Flüssigkeit 17, die noch Luftblasen enthalten kann, wird weitergefördert und kann einem üblichen automatischen Luftabscheider zugeführt werden, wo gefahrlos Luft abgeschieden werden kann.

### Bezugszeichenliste

- 1: Gasmischung
- 2: Innere Kammer
- 3: keramische Schicht
- 4: Polymermembran
- 5: Stützgerüst
- 6: Sammelkammer
- 7: Druckmessung
- 8: Vakuumpumpe
- 9: weitere Verwendung
- 10: Konzentrationsmessung
- 11: Druckmessung
- 12: Reduzierventil
- 13: Atmosphäre
- 14: Flüssigkeit
- 15: Strömungsteil
- 16: Gewirre
- 17: Flüssigkeit

## Patentansprüche

1. Verwendung eines Membran-Gasabscheiders für die Klima-Heizungs-Lüftungstechnik zum Abscheiden von Gasblasen, die ein brennbares Gas enthalten können, aus einer fließenden wässrigen Flüssigkeit zur Übertragung von Wärme aus einem Kältekreis oder an ihn, wobei der Kältekreis mit einem entzündllichen Kältemittel betrieben wird,, der Membranabscheider aufweisend
- mindestens eine Kammer (6) zur Sammlung von abgeschiedenen kältemittelhaltigen Gasbestandteilen,
- einem Abzug für die abgeschiedenen kältemittelhaltigen Gasbestandteile
- im Strömungsweg des abzuscheidenden Gases eine Kompositmembran, die aus mindestens zwei Schichten zusammengesetzt ist, von denen mindestens eine Schicht (3) aus einer keramischen Schicht aus Zeolith und mindestens eine weitere Schicht (4) aus einer gummiartigen Polymermembran gebildet ist,
- und die mindestens eine Schicht aus der keramischen Schicht aus Zeolith im Strömungsweg des abzuscheidenden Gases als erste Schicht vorgesehen wird,
- nachfolgend der weitere Schicht aus einer gummiartigen Polymermembran im Strömungsweg die Kammer zur Sammlung von abgeschiedenen Gasbestandteilen angeordnet ist, die über einen Anschluss verfügt, der an einen unter Unterdruck stehenden Abzug angeschlossen ist
- **dadurch gekennzeichnet, dass**
- in der keramischen Schicht aus Zeolith die kältemittelhaltigen, brennbaren Gasbestandteile entweder aus der Gasphase oder aus der Flüssigphase heraus adsorbiert werden,
- nachfolgend im Strömungsweg des abzuscheidenden Gases die weitere Schicht aus einer gummiartigen Polymermembran als Diffusionsschicht ausgebildet ist.

2. Verwendung eines Gasabscheiders nach Anspruch 1, **dadurch gekennzeichnet, dass** die gummiartige Polymermembran aus Polydimethylsiloxan gebildet ist.

3. Verwendung eines Gasabscheiders nach Anspruch 1, **dadurch gekennzeichnet, dass** die gummiartige Polymermembran aus Polyetherblockamid gebildet ist.

4. Verwendung eines Gasabscheiders nach Anspruch 1, **dadurch gekennzeichnet, dass** die gummiartige Polymermembran aus Polybutadien gebildet ist.

5. Verwendung eines Gasabscheiders nach einem der Ansprüche 2 bis 4, **dadurch gekennzeichnet, dass** die gummiartige Polymermembran aus einer Mischung aus Polydimethylsiloxan, Polyetherblockamid und Polybutadien gebildet ist.

## Claims

1. Use of a membrane gas separator for air conditioning-heating-ventilation technology for separating gas bubbles, which may contain a flammable gas, from a flowing aqueous liquid for transferring heat from or to a refrigeration circuit, the refrigeration circuit being operated with a flammable refrigerant, the membrane separator comprising
- at least one chamber (6) for collecting separated gas components containing refrigerant,
- a fume cupboard for the separated gas containing refrigerant
- a composite membrane in the flow path of the gas to be separated, which is composed of at least two layers, of which at least one layer (3) is formed from a ceramic layer of zeolite and at least one further layer (4) is formed from a rubber-like polymer membrane
- and the at least one layer of the ceramic layer of zeolite is provided as the first layer in the flow path of the gas to be separated,
- downstream of the further layer of a rubbery polymer membrane in the flow path is the chamber for collecting separated gas components, which has a connection that is connected to an exhaust under negative pressure.
**characterised in that**
- the flammable gas components containing refrigerant are adsorbed in the ceramic zeolite layer either from the gas phase or from the liquid phase,
- subsequently in the flow path of the gas to be separated, the further layer of a rubber-like polymer membrane is formed as a diffusion layer.

2. Use of a gas separator according to claim 1, **characterised in that** the rubber-like polymer membrane is formed from polydimethylsiloxane.

3. Use of a gas separator according to claim 1, **characterised in that** the rubber-like polymer membrane is formed from polyether block amide

4. Use of a gas separator according to claim 1, **characterised in that** the rubber-like polymer membrane is formed from polybutadiene

5. Use of a gas separator according to one of claims 2 to 4, **characterised in that** the rubber-like polymer membrane is formed from a mixture of polydimethylsiloxane, polyether block amide and polybutadiene.

## Revendications

1. Utilisation d'un séparateur de gaz à membrane pour la ventilation, le chauffage et la climatisation pour la séparation de bulles de gaz qui peuvent contenir un gaz combustible, d'un liquide aqueux s'écoulant pour la transmission de chaleur depuis un circuit frigorifique ou à celui-ci, dans laquelle le circuit frigorifique fonctionne avec un réfrigérant inflammable, le séparateur de membrane présente
- au moins une chambre (6) pour la collecte de constituants gazeux séparés contenant du réfrigérant,
- une évacuation pour les constituants gazeux séparés contenant du réfrigérant
- dans la voie de circulation du gaz à séparer, une membrane composite qui est constituée d'au moins deux couches, dont au moins une couche (3) est formée d'une couche céramique en zéolithe et au moins une autre couche (4) est formée d'une membrane en polymère caoutchouteuse,
- et l'au moins une couche formée de la couche céramique en zéolithe est prévue dans la voie de circulation du gaz à séparer comme première couche,
- la chambre pour la collecte de constituants gazeux séparés est agencée après l'autre couche formée d'une membrane en polymère caoutchouteuse dans la voie de circulation, chambre qui dispose d'un raccord qui est raccordé à une évacuation se trouvant sous pression négative
- **caractérisée en ce que**
- les constituants gazeux combustibles contenant du réfrigérant sont adsorbés en phase gazeuse ou en phase liquide dans la couche céramique en zéolithe,
- l'autre couche formée d'une membrane en polymère caoutchouteuse est ensuite formée comme couche de diffusion dans la voie de circulation du gaz à séparer.

2. Utilisation d'un séparateur de gaz selon la revendication 1, **caractérisée en ce que** la membrane en polymère caoutchouteuse est formée de polydiméthylsiloxane.

3. Utilisation d'un séparateur de gaz selon la revendication 1, **caractérisée en ce que** la membrane en polymère caoutchouteuse est formée de polyéther bloc amide.

4. Utilisation d'un séparateur de gaz selon la revendication 1, **caractérisée en ce que** la membrane en polymère caoutchouteuse est formée de polybutadiène.

5. Utilisation d'un séparateur de gaz selon l'une quelconque des revendications 2 à 4, **caractérisée en ce que** la membrane en polymère caoutchouteuse est formée d'un mélange de polydiméthylsiloxane, de polyéther bloc amide et de polybutadiène.
